# EUROPEAN PATENT SPECIFICATION

(11) **EP 4 411 334 B1**
(45) Date of publication and mention of the grant of the patent: **17.09.2025**
(21) Application number: 24155740.4
(22) Date of filing: 05.02.2024
(51) Int. Cl.: G01M 3/24, F01D 21/00, G01M 15/14, G01N 29/14

(54) **SYSTEM AND METHOD FOR DETECTING SEAL LEAKS IN A GAS TURBINE ENGINE**
SYSTEM UND VERFAHREN ZUR ERKENNUNG VON DICHTUNGSLECKS IN EINEM GASTURBINENMOTOR
SYSTÈME ET PROCÉDÉ DE DÉTECTION DE FUITES D'ÉTANCHÉITÉ DANS UN MOTEUR À TURBINE À GAZ

(30) Priority: 03.02.2023 US 202318105649
(43) Date of publication of application: 07.08.2024
(73) Proprietor: Pratt & Whitney Canada Corp., (01BE5) Longueuil, QC J4G 1A1 (CA)
(72) Inventor: GONZALEZ, Jeremy, (01BE5) Longueuil J4G 1A1 (CA); PARK, Jong, (01BE5) Longueuil J4G 1A1 (CA)
(74) Representative: Dehns

(56) References cited:
- US-A1- 2004 009 065
- US-A1- 2015 260 611
- US-B2- 9 453 784

## Description

### BACKGROUND OF THE INVENTION

### 1. Technical Field

The present disclosure relates to gas turbine engines in general, and to systems and methods for detecting seal leaks between adjacent sealed compartments in particular.

### 2. Background Information

Seals are used in gas turbine engines to prevent leakage between mating components. Because a deteriorated seal can negatively affect the performance of the gas turbine engine, seals are regularly inspected to ascertain the ability of the seal to function. An in-situ inspection is usually carried out during field maintenance while engines on wing, but not in operation. Conventional seal inspection techniques sometimes include pressurizing a cavity disposed on one side of a seal and thereafter monitoring the static pressure in that cavity for a period of time. A pressure drop below a given threshold may provide an indication that the seal is leaking beyond an acceptable amount. A disadvantage of this method is that it typically requires a large air pressure source to pressurize the cavity. Another disadvantage of this method is that it may identify a potential leak, but may not identify exactly where the leak exists. The complex nature of a gas turbine engine makes it difficult using this method to identify the exact leakage location; e.g., internal cavities are very often not readily accessible in a gas turbine engine and this issue is often exacerbated when the engine is disposed on wing within a nacelle.

The document US2004/009065A1 discloses an example of a method and a device for identifying defects in an annular seal, which connects axially spaced rotor discs of a turbomachine, using acoustic sensors.

What is needed is a system and method that prove an improved method for seal leakage testing, and one that is able to specifically identify where a leak exists.

### SUMMARY

According to an aspect of the present disclosure, a method of inspecting a sealed compartment within a gas turbine engine is provided. The sealed compartment has an interior cavity defined by one or more containment walls. The sealed compartment includes a seal and at least one port providing passage into the interior cavity. The method includes: using at least one acoustic transmitter to produce at least one emitted acoustic signal into the interior cavity, the at least one acoustic transmitter in communication with the at least one port; using an array of acoustic sensors to sense acoustic signals, the acoustic sensors disposed in proximity to the seal outside of the interior cavity of the sealed compartment, each acoustic sensor configured to sense emitted acoustic signals produced by the acoustic transmitter and to produce signal data representative of sensed acoustic signals, and determining the presence or absence of a compromised region of the seal using the signal data from at least one of the acoustic sensors of the array of acoustic sensors.

In any of the aspects or embodiments described above and herein, the determining may further include evaluating the signal data from at least one of the acoustic sensors of the array of acoustic sensors relative to the signal data from at least one other acoustic sensor of the array of acoustic sensors.

In any of the aspects or embodiments described above and herein, the determining may further include evaluating the signal data from at least one of the acoustic sensors of the array of acoustic sensors relative to the signal data from each of the other acoustic sensors of the array of acoustic sensors.

In any of the aspects or embodiments described above and herein, the determining may further include evaluating the signal data from at least one of the acoustic sensors of the array of acoustic sensors relative to stored signal data representative of background noise.

In any of the aspects or embodiments described above and herein, the seal may extend circumferentially relative to the compartment, and the sensors of the array of acoustic sensors may be disposed at circumferential positions relative to the seal.

In any of the aspects or embodiments described above and herein, the sensors of the array of acoustic sensors may be uniformly spaced apart from one another.

In any of the aspects or embodiments described above and herein, the sensors of the array of acoustic sensors may be non-uniformly spaced apart from one another.

According to another aspect of the present disclosure, a method of inspecting a sealed compartment within a gas turbine engine is provided. The sealed compartment has an interior cavity defined by one or more containment walls. The sealed compartment includes a seal and at least one port providing passage into the interior cavity. The method includes: using at least one acoustic transmitter to emit at least one acoustic signal into the interior cavity, the acoustic transmitter in communication with the at least one port; using at least one acoustic sensor to sense acoustic signals in the interior cavity, the at least one acoustic sensor in communication with the at least one port, the at least one acoustic sensor configured to sense emitted acoustic signals produced by the at least one acoustic transmitter and to produce signal data representative of sensed acoustic signals; and determining the presence or absence of a compromised region of the seal using the signal data from the at least one acoustic sensor.

In any of the aspects or embodiments described above and herein, the at least one port may include a first port providing passage into the interior cavity and a second port providing passage into the interior cavity, and the at least one acoustic transmitter may be in communication with the first port, and the at least one acoustic sensor may be in communication with the second port.

In any of the aspects or embodiments described above and herein, the determining may include producing an inspection acoustic signature using the signal data from the at least one acoustic sensor, and may include determining the presence or absence of a compromised region of the seal by analyzing the inspection acoustic signature relative to a standard acoustic signature associated with the compartment and an uncompromised seal.

In any of the aspects or embodiments described above and herein, the inspection acoustic signature may include a first transfer function and the standard acoustic signal may include a second transfer function.

In any of the aspects or embodiments described above and herein, the first transfer function may be produced using the emitted acoustic signals and the sensed acoustic signals.

According to another aspect of the present disclosure, a system for inspecting a sealed compartment within a gas turbine engine is provided. The compartment has an interior cavity defined by one or more containment walls. The sealed compartment includes a seal and at least one port providing passage into the interior cavity. The system includes at least one acoustic transmitter, an array of acoustic sensors, and a controller. The acoustic transmitter is configured to selectively produce at least one emitted acoustic signal into the interior cavity. The array of acoustic sensors is configured to sense acoustic signals. The acoustic sensors are configured to be positioned in proximity to the seal outside of the interior cavity of the sealed compartment. Each acoustic sensor is configured to sense emitted acoustic signals produced by the acoustic transmitter and to produce signal data representative of sensed acoustic signals. The controller is in communication with the at least one acoustic transmitter, the array of acoustic sensors, and a non-transitory memory storing instruction. The instructions when executed cause the controller to: control the at least one acoustic transmitter to selectively produce at least one emitted acoustic signal into the interior cavity; receive the signal data produced by the array of acoustic sensors; and determine the presence or absence of a compromised region of the seal using the signal data from at least one of the acoustic sensors of the array of acoustic sensors.

In any of the aspects or embodiments described above and herein, the instructions when executed may cause the controller to evaluate the signal data from at least one of the acoustic sensors relative to the signal data from at least one other acoustic sensor.

In any of the aspects or embodiments described above and herein, the instructions when executed may cause the controller to evaluate the signal data from at least one of the acoustic sensors relative to stored signal data representative of background noise.

According to an aspect of the present disclosure, a system for inspecting a sealed compartment within a gas turbine engine is provided. The sealed compartment has an interior cavity defined by one or more containment walls. The sealed compartment includes a seal and at least one port providing passage into the interior cavity. The system includes at least one acoustic transmitter, at least one acoustic sensor, and a controller. The at least one acoustic transmitter is configured to emit at least one acoustic signal into the interior cavity. The at least one acoustic sensor is configured to sense acoustic signals in the interior cavity, and configured to sense emitted acoustic signals produced by the at least one acoustic transmitter and produce signal data representative of sensed acoustic signals. The controller is in communication with the at least one acoustic transmitter, the at least one acoustic sensor, and a non-transitory memory storing instructions, which instructions when executed cause the controller to: control the at least one acoustic transmitter to selectively produce at least one emitted acoustic signal into the interior cavity; receive the signal data produced by the at least one acoustic sensor; and determine the presence or absence of a compromised region of the seal using the signal data from the at least one of the acoustic sensor.

In any of the aspects or embodiments described above and herein, the at least one port may include a first port providing passage into the interior cavity and a second port providing passage into the interior cavity, and the at least one acoustic transmitter may be configured to be in communication with the first port and the at least one acoustic sensor may be configured to be in communication with the second port.

In any of the aspects or embodiments described above and herein, the instructions when executed may further cause the controller to produce an inspection acoustic signature using the signal data from the at least one acoustic sensor, and determine the presence or absence of a compromised region of the seal by analyzing the inspection acoustic signature relative to a standard acoustic signature associated with the compartment and an uncompromised said seal.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic sectional view of a gas turbine engine.
FIG. 2 is a diagrammatic end view of a gas turbine engine compartment and an embodiment of the present disclosure system.
FIG. 3 is a diagrammatic sectional view of the gas turbine engine shown in FIG. 2.
FIG. 4 is a graph of signal data from an acoustic sensor.
FIG. 5 is a diagrammatic end view of a gas turbine engine compartment and an embodiment of the present disclosure system.
FIG. 6 is a diagrammatic sectional view of the gas turbine engine shown in FIG. 5.
FIG. 7 is a graph of signal data from an acoustic sensor.
FIG. 8 is a diagrammatic sectional view of the gas turbine engine compartment and an embodiment of the present disclosure system.
FIG. 9 is a diagrammatic sectional view of the gas turbine engine compartment and the present disclosure system shown in FIG. 8.
FIG. 10A is a diagrammatic representation of a process example for evaluating acoustic sensor signals for an embodiment of the present disclosure, showing no seal leak.
FIG. 10B is a diagrammatic representation of a process example for evaluating acoustic sensor signals for an embodiment of the present disclosure, showing a seal leak.
FIG. 11 is a flow chart illustrating an example of a process for evaluating acoustic sensor signals for an embodiment of the present disclosure.
FIG. 12 is a diagrammatic sectional view of the gas turbine engine compartment and an embodiment of the present disclosure system.

### DETAILED DESCRIPTION

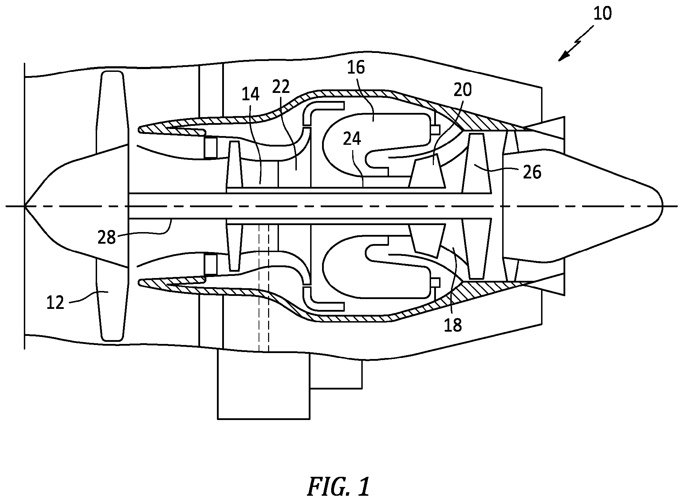

FIG. 1 illustrates an exemplary gas turbine engine 10 that includes a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. High pressure rotor(s) 20 of the turbine section 18 are drivingly engaged to high pressure rotor(s) 22 of the compressor section 14 through a high pressure shaft 24. Low pressure rotor(s) 26 of the turbine section 18 are drivingly engaged to the fan 12 rotor and to other low pressure rotor(s) (not shown) of the compressor section 14 via a low pressure shaft 28. The low pressure shaft 28 may extend within the high pressure shaft 24 and rotates independently from the high pressure shaft 24. The present disclosure is directed to a system 28 and methods for maintenance and inspection of gas turbine engines like the turbofan engine shown in FIG. 1 as well as a variety of other types of gas turbine engines, auxiliary power units (APUs), hybrid electric propulsion systems, and the like.

Gas turbine engines include numerous internal compartments that are filled with pressurized air during operation for various purposes; e.g., a first compartment containing air (or other gas) disposed at a first temperature and pressure adjacent a second compartment containing air disposed at a second temperature and pressure. Sealing between the compartments prevents migration of air between the first two compartments; e.g., the seal prevents air in the first compartment migrating into the adjacent second compartment, or leaking to the exterior environment. Air migration from compartment to compartment can negatively affect the performance of the engine and/or negatively affect the effectiveness of cooling in the engine. As stated above, gas turbine engines are subject to routine maintenance and inspection protocols wherein the integrity of a seal between adjacent compartments is evaluated. The present disclosure provides an improved system 28 and methods for evaluating the integrity of a seal between adjacent compartments.

Embodiments of the present disclosure system 28 include at least one acoustic sensor 30, at least one acoustic transmitter 32, and a controller 34. In some embodiments, the at least one acoustic sensor 30 is an array 130 of acoustic sensors 30. Each acoustic sensor 30 is configured to sense an acoustic signal (e.g., an acoustic wave). As will be detailed herein, the acoustic sensors 30 are configured to detect and provide signals representative of acoustic signals emitted by the acoustic transmitter 32. The present disclosure is not limited to any particular type of acoustic sensor other than one that is capable of sensing the acoustic signals emitted by the transmitter 32 in the described application.

The acoustic transmitter 32 is configured to selectively produce an acoustic signal in a form that can be readily sensed by the acoustic sensors 30. The acoustic signal may be in the range of about 20Hz to about 20kHz. In preferred embodiments, the acoustic signals produced by the acoustic transmitter 32 are in a form that is repeatable and easily distinguishable in gas turbine engine inspection environment; e.g., distinguishable from any background environmental acoustic signals that may be present during the inspection process. In some embodiments, the acoustic transmitter 32 may be configured to selectively produce a plurality of different signals; e.g., a first signal at a first frequency, a second signal at a second frequency, and the like. In some embodiments, the "transmitter" may in fact include a plurality of independent transmitters, each configured to produce different acoustic signals; e.g., at a different frequencies. In preferred embodiments, the acoustic transmitter 32 produces acoustic signals that are characterized by a strong signal to noise ratio (SNR). The acoustic transmitter 32 may be controlled to produce an acoustic signal on demand, or periodically, or in a frequency sweeping mode, or the like. The present disclosure is not limited to any particular transmitter 32 control methodology.

In some embodiments, the present disclosure may include components configured to facilitate the sensing and processing of the selectively produced acoustics signals. Examples of such components include signal filtering components, signal amplifiers, and the like.

The controller 34 is in communication with the array 130 of acoustic sensors 30, the at least one acoustic transmitter 32, and other system components as described herein. The controller 34 may be in communication with these components to control and/or receive signals therefrom to perform the functions described herein. The controller 34 may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the system 28 to accomplish the same algorithmically and/or coordination of system components. The controller 34 includes or is in communication with one or more memory devices. The present disclosure is not limited to any particular type of memory device, and the memory device may store instructions and/or data in a non-transitory manner. Examples of memory devices that may be used include a computer readable storage medium, a read-only memory, random access memory, volatile memory, non-volatile memory, static memory, dynamic memory, flash memory, cache memory, and/or any device that stores digital information. The controller 34 may include, or may be in communication with, an input device that enables a user to enter data and/or instructions, and may include, or be in communication with, an output device configured, for example to display information (e.g., a visual display or a printer), or to transfer data, etc. Communications between the controller 34 and other system components may be via a hardwire connection or via a wireless connection.

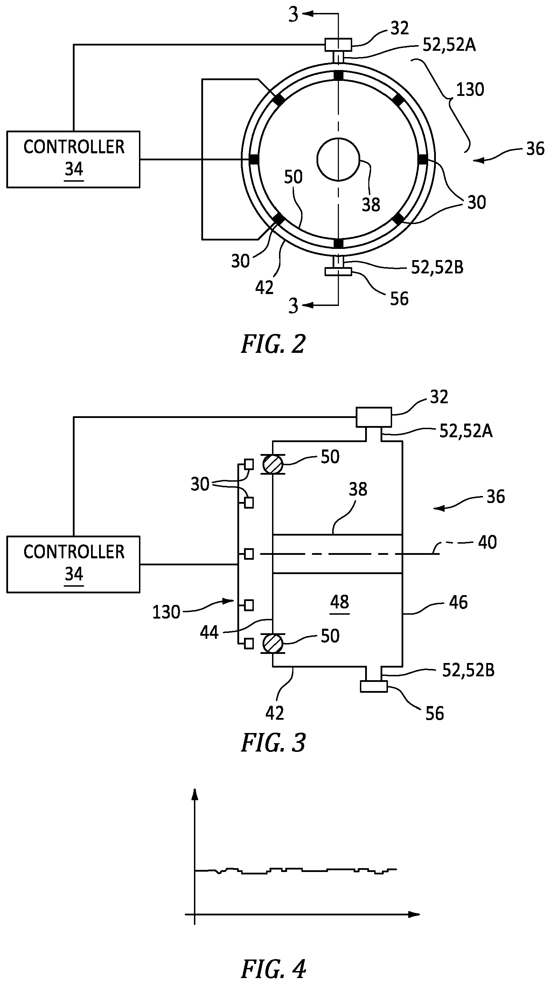

FIG. 2 diagrammatically illustrates a compartment 36 disposed around a shaft 38 extending along a central axis 40 of an engine. Pressurized compartments 36 disposed within a gas turbine engine may assume a variety of configurations, which configurations are often annular. The compartments 36 shown in FIGS. 2, 3, 5, 6, 8, and 9 are intended to diagrammatically represent an annular compartment 36 within a gas turbine engine that is pressurized during operation of the engine. The present disclosure is not, however, limited to use with any particular compartment 36 configuration. FIG. 3 is a sectional side view of the compartment 36 shown in FIG. 2 from the viewpoint of sectional cut line 3-3. The compartment 36 has an outer radial wall 42, a first end wall 44, and a second end wall 46 that is opposite the first end wall 44. The outer radial wall 42 and first and second end walls 44, 46 define an interior cavity 48 of the compartment 36. A circumferentially extending seal 50 is diagrammatically shown engaged with the first end wall 44 of the compartment 36. The seal 50 is configured to seal (e.g., to prevent airflow) between this compartment 36 and an adjacent compartment (not shown) or other region outside of the compartment 36 disposed on the opposite side of the first end wall 44. A carbon seal is an example of a seal 50 that may be used in a gas turbine engine to seal between compartments. In the FIGURES, the seal 50 is shown diagrammatically to facilitate an understanding of the present disclosure. The present disclosure is applicable to any seal configured to seal between adjacent compartments and therefore is not limited to any particular type of seal 50. The compartment 36 is shown diagrammatically as having a cylindrical configuration but is not limited thereto.

The compartment 36 includes at least one port 52 disposed in the outer radial wall 42. The port 52 provides an access passage into the interior cavity 48 of the compartment 36. An example of a structure that may be used as a compartment port 52 in a gas turbine engine is an opening configured for receiving a borescope. The compartment 36 diagrammatically shown in FIGS. 3, 5, 6, 8, and 9 includes a first port 52A and a second port 52B, disposed opposite one another (e.g., 180 degrees around the circumference). The present disclosure may have more than two ports 52 (or three ports 52, or four ports 52, or more), and the ports 52 are not limited to any particular offset from one another; e.g., two ports 52 at 180 degrees offset, three ports 52 at one hundred and twenty degrees from one another, and the like.

FIGS. 2 and 3 illustrate an embodiment of the present disclosure having an array 130 of acoustic sensors 30 disposed circumferentially in proximity to the circumference of the seal 50 outside of the compartment 36. The sensors 30 in the array 130 are shown uniformly spaced apart from one another around the circumference. The present disclosure is not limited to any particular sensor 30 spacing arrangement relative to the seal 50. In some embodiments, sensors 30 within the array 130 may be located at predetermined positions relative to the seal 50. If, for example, certain seal 50 regions are more prone to leakage and other seal 50 regions have a very low probability of leakage, the sensors 30 may be non-uniformly distributed emphasizing the potential issue regions over the regions with low probability of leakage. The array 130 of sensors 30 may be mounted so that the sensors 30 are mounted before, during, and after inspection, and are intended to be present during operation of the gas turbine engine. Hence, when the sensor array 130 is available for use at any time. Alternatively, the sensor array 130 may be configured so that it can be deployed prior to an inspection and subsequently removed after the inspection.

During an inspection, the acoustic transmitter 32 is operated to produce acoustic signals. The acoustic transmitter 32 may be operated to selectively produce acoustic signals on demand, or it can be controlled to produce acoustic signals periodically, or in any other manner as described above. The acoustic transmitter 32 may be disposed in the port 52 disposed in the compartment wall, or it may extend through the port 52 and be disposed within the interior cavity 48. In some embodiments, the port 52 may be hermetically sealed to mitigate the potential for environmental acoustic signals traversing the port and creating noise. The acoustic sensors 30 in the sensor array 130 disposed circumferentially around the seal 50 are in communication with the controller 34, sending signals representative of sensed acoustic signals ("inspection acoustic signals"). The controller 34 in turn may process the sensor signals into a form discernible by the user. For example, FIGS. 2 and 3 diagrammatically illustrate a compartment 36 having a seal 50 properly functioning. FIG. 4 is a diagrammatic graph of amplitude versus frequency based on the sensor signals provided to the controller 34 for a single sensor 30. FIG. 4 illustrates a relatively flat amplitude signal representing background noise and the absence of a distinguished signal (e.g., an amplitude peak) associated with an acoustic signal emitted from the acoustic transmitter 32. If all of the acoustic sensors 30 in the array 130 produce similar signal patterns, then there is no indication of a compromised seal region. In some embodiments, the process of determining the absence or presence of a compromised seal 50 region may involve comparing the signal data (i.e., the "inspection acoustic signals") of one acoustic sensor 30 relative to the signal data produced by other acoustic sensors 30 within the array 130. In alternative embodiments, the process of determining the absence or presence of a compromised seal region may involve comparing the signal data of each acoustic sensor 30 ("inspection signal data") relative to a standard set of signal data (e.g., based on empirical data) that may be representative of background acoustic signals in the absence of a leak across the seal 50.

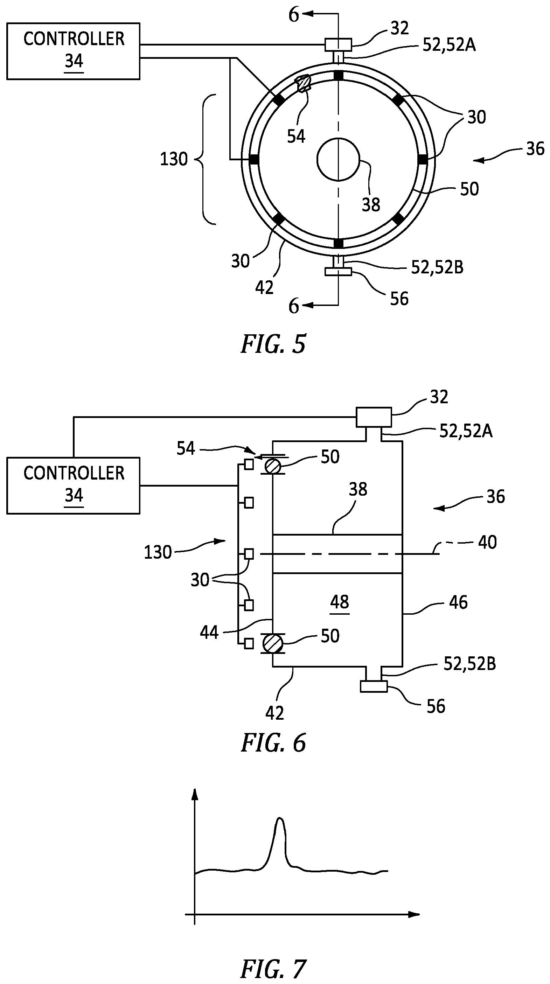

FIGS. 5-7, in contrast, diagrammatically illustrate a compartment 36 having a compromised region 54 adjacent the top of the seal 50. The graph for each sensor 30 in uncompromised seal regions may appear as shown in FIG. 4; i.e., indicating only background noise. The graph for the sensor 30 in closest proximity to the compromised seal region 54 (e.g., see FIG. 7), in contrast, illustrates a relatively sharp peak deviating from the signals representing background noise. The sharp peak is indicative of an acoustic signal differing from the background noise and consequently indicative of a compromised seal region 54. The ability of air to leak through the compromised seal region 54 relates to the ability of the acoustic signal (i.e., acoustic waves) to also traverse the compromised seal region 54. The exact form of the acoustic signal deviating from the acoustic signal representative of background noise will likely vary depending on the nature of the compromised seal region 54.

Of course, it is possible that a compromised seal region 54 may extend a distance proximate more than one sensor 30, or a seal 50 may have more than one compromised region, which regions may be sensed by independent sensors 30. In these instances, more than one sensor 30 within the array 130 may produce signal data indicative of the compromised region(s). Still further, acoustic signals associated with a compromised seal region 54 may be sensed by both "near" and "far" sensors 30 relative to the compromised seal region 54. In these instances, the characteristics (e.g., amplitude) of the sensed acoustic signals produced by the near and far sensors 30 may provide information regarding the location of the compromised seal region 54; e.g., the signal amplitude (greater vs. lesser) sensed by the respective acoustic sensors 30 may be indicative of proximity to the compromised seal region 54.

FIGS. 4 and 7 illustrate a graphical representation of the sensed acoustic signals. The present disclosure system 28 may be configured to produce a visual representation like that shown in FIGS. 4 and 7, but a visual representation is not required. In some embodiments, the controller 34 may be configured (e.g., via stored instructions) to process the acoustic signals produced by the acoustic sensors 30 in the array 130 and provide information (e.g., in numerical form) relating to those acoustic sensors 30. The aforesaid processing may include threshold filtering configured to evaluate signal variance and the significance thereof, if any; e.g., signal variance below a predetermined threshold may be considered to be inconsequential (no flag raised), and signal variance above a predetermined threshold may be considered to be consequential (flag raised). An analysis of this type may produce information (e.g., data values) useful to an inspector to determine the presence or absence of a compromised seal region.

Embodiments of the present disclosure system 28 may be configured to facilitate identifying a compromised seal region. For example, the signals produced by a respective acoustic sensor 30 may be identifiable by the controller 34 from the signals produced by other acoustic sensors 30; i.e., the controller 34 may be able to distinguish signals from sensor A from those produced by sensor B and the like. The present disclosure is not limited to any particular manner for distinguishing signals from a sensor A from those produced by sensor B. Using an acoustic transmitter 32 that transmits a plurality of different frequencies and a plurality of sensors, each configured to detect a specific frequencies is an example of how sensors 30 may be distinguished from one another.

In the embodiment shown in FIGS. 2, 3, 5, and 6, the compartment 36 includes a first port 52A and a second port 52B. The acoustic transmitter 32 is in communication with the first port 52A in a manner that permits acoustic signals emitted by the acoustic transmitter 32 to enter the interior cavity 48 of the compartment 36. In this embodiment, the second port 52B is closed with a cap 56 to closed the passage into the compartment 36. As stated above, the acoustic transmitter 32 may be disposed in the first port 52A, or it may extend through the first port 52A and be disposed within the interior cavity 48, and the first port 52A may be hermetically sealed.

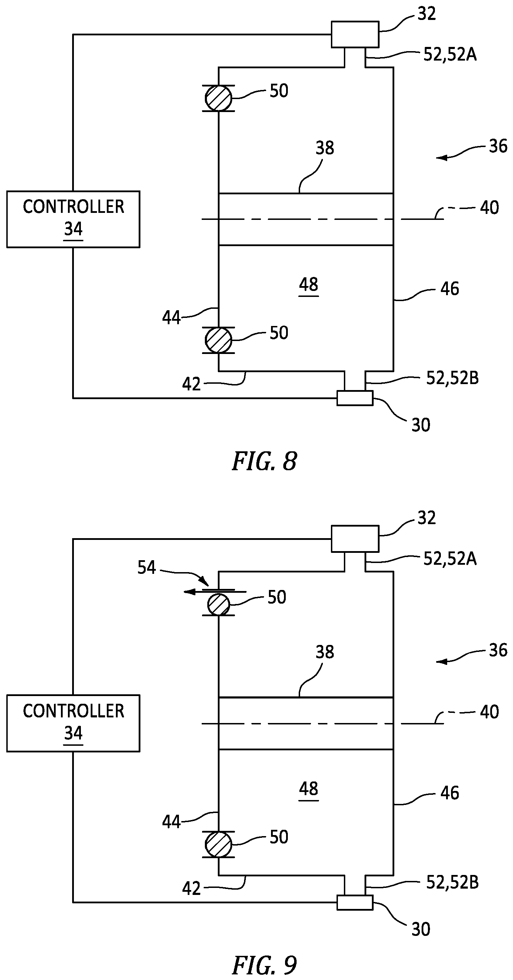

In the embodiment shown in FIGS. 8 and 9, the compartment 36 includes a first port 52A and a second port 52B. The acoustic transmitter 32 is in communication with the first port 52A in a manner that permits acoustic signals emitted by the acoustic transmitter 32 to enter the interior cavity 48 of the compartment 36. Here again, as stated above the acoustic transmitter 32 may be disposed in the first port 52A, or it may extend through the first port 52A and be disposed within the interior cavity 48, and the first port 52A may be hermetically sealed. In this embodiment, an acoustic sensor 30 is disposed in communication with the second port 52B. The acoustic transmitter 32 may be disposed in the second port 52B, or it may extend through the second port 52B and be disposed within the interior cavity 48, and the second port 52B may be hermetically sealed. This embodiment provides a means for acoustically testing the integrity of the seal 50 without the need to dispose acoustic sensors 30 around the circumference of the seal 50. FIG. 8 diagrammatically shows a seal 50 that is functioning. FIG. 9 diagrammatically shows a seal 50 that has a compromised region 54.

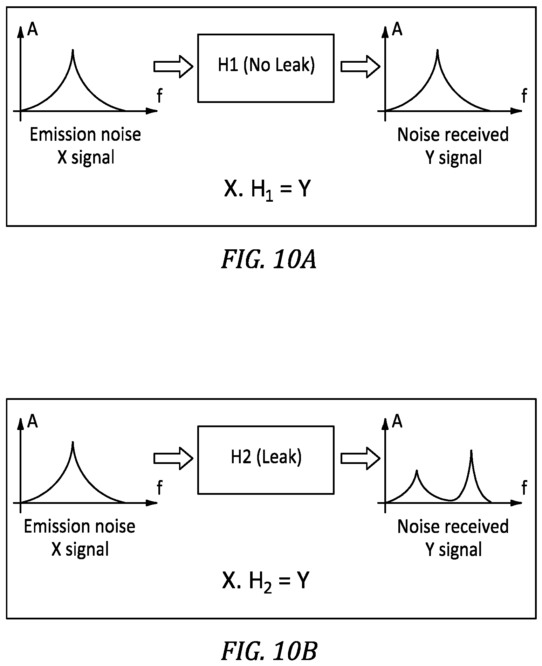

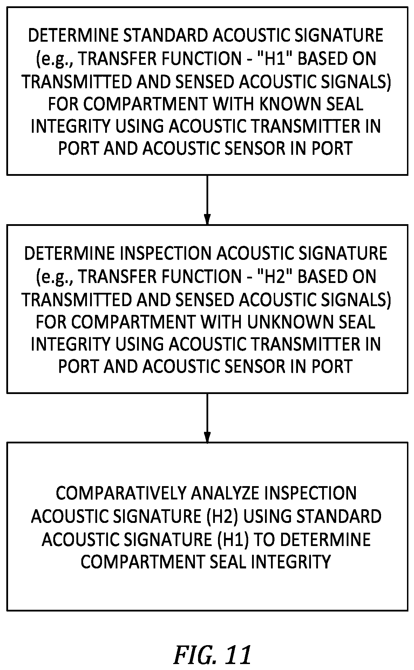

Referring to FIGS. 10A, 10B, and 11, the above-described configuration (acoustic transmitter 32 in the first port 52A, acoustic sensor 30 in the second port 52B) may be used to initially sense a compartment 36 known to have appropriate seal 50 integrity. The collected signal data may be processed to produce an acoustic signature (a "standard acoustic signature" that may be in the form of a transfer function "H1") associated with a compartment 36 known to have appropriate seal 50 integrity. During an inspection, the signals produced by the acoustic sensor 30 in communication with the second port 52B may be processed in the same manner to produce an acoustic signature (an "inspection acoustic signature" in the form of a transfer function "H2") for the specific compartment 36 under inspection. The inspection acoustic signature can then be analyzed relative to the standard acoustic signature; e.g., a comparative analysis of the standard transfer function versus the inspection transfer function (H1 vs H2). Discrepancies between the inspection acoustic signature and the standard acoustic signature may provide information regarding the integrity of the compartment seal 50.

In many instances, a seal 50 may wear over time as a result of engine operation or for other reason. A seal 50 with some degree of wear may function within acceptable parameters, but may result in a different acoustic signature that the same seal 50 / compartment 36 arrangement with no wear. In view thereof, some embodiments of the present disclosure may include stored information (e.g., stored instructions, or a stored database) relating to acoustic signatures ("milestone acoustic signatures") associated with a compartment 36 known to have appropriate seal 50 integrity at a plurality of operating milestones; e.g., an acoustic signature associated with intervals of flight hours (e.g., intervals of "X" number of flight hours - X, 2X, 3X and the like), or an acoustic signature associated with numbers of flight cycles (where each flight cycle includes a take-off and a landing - "Y" number of flight cycles, 2Y flight cycles, etc.), or the like. As described above, the signals produced by the acoustic sensor 30 in communication with the second port 52B may be processed to produce an inspection acoustic signature and that inspection acoustic signature may be analyzed relative to the appropriate milestone acoustic signature.

In some embodiments the stored information may be configured (e.g., by mathematical equation, or predictive analysis, or the like) to produce a determined standard acoustic signature for the compartment 36 based on engine operational history. This may be accomplished, for example, by using an algorithmic equation fit to collected data, or the like. An inspection acoustic signature and the determined acoustic signature can then be used to evaluate the integrity of the compartment seal 50.

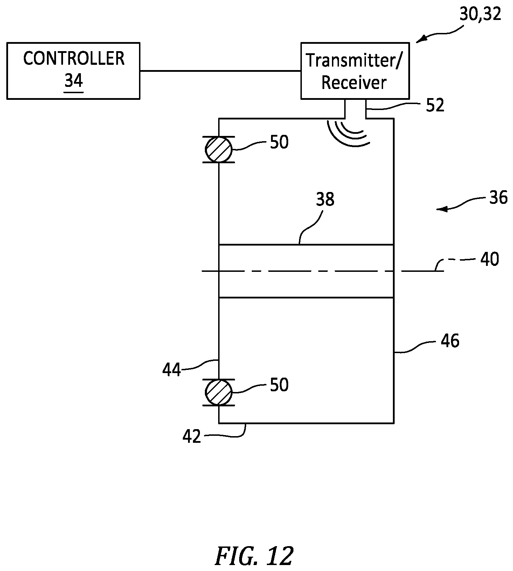

As stated above, the present disclosure may be utilized in an embodiment wherein the compartment 36 has only a single port 52. FIG. 12 diagrammatically illustrates an embodiment wherein an acoustic sensor 30 and an acoustic transmitter 32 utilize the same port 52. A benefit of this embodiment is that it may be used when there is only a single port 52 available. As an alternative embodiment, transmitting and receiving transducers (described above as acoustic sensor 30 and acoustic transmitter 32) may take the form of an ultrasonic transmitter and an ultrasonic receiver, or a single transducer configured to act as both an ultrasonic transmitter and receiver. The ultrasonic transmitter and receiver, or singular ultrasonic transducer, may be controlled to selectively transmit ultrasonic signals into the interior cavity 48 of the compartment 36 and to receive reflected ultrasonic signals. The reflected ultrasonic signals generated in a compartment 36 that does not include a compromised seal 50 will be distinct from the reflected ultrasonic signals generated in a compartment 36 that does include a compromised seal 50. In this alternative embodiment, the transmitted ultrasonic signals are typically above 20 kHz.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

## Claims

1. A method of inspecting a sealed compartment (36) within a gas turbine engine (10), the sealed compartment (36) having an interior cavity (48) defined by one or more containment walls, the sealed compartment (36) including a seal (50) and at least one port (52) providing passage into the interior cavity (48), the method comprising:
using at least one acoustic transmitter (32) to produce at least one emitted acoustic signal into the interior cavity (48), the at least one acoustic transmitter (32) in communication with the at least one port (52);
using an array (130) of acoustic sensors (30) to sense acoustic signals, the acoustic sensors (30) disposed in proximity to the seal (50) outside of the interior cavity (48) of the sealed compartment (36), each said acoustic sensor (30) configured to sense emitted acoustic signals produced by the at least one acoustic transmitter (32) and to produce signal data representative of sensed acoustic signals; and
determining the presence or absence of a compromised region (54) of the seal (50) using the signal data from at least one of the acoustic sensors (30) of the array (130) of acoustic sensors (30).

2. The method of claim 1, wherein the determining further includes evaluating the signal data from at least one of the acoustic sensors (30) of the array (130) of acoustic sensors (30) relative to the signal data from at least one other said acoustic sensor (30) of the array (130) of acoustic sensors (30).

3. The method of claim 1, wherein the determining further includes evaluating the signal data from at least one of the acoustic sensors (30) of the array (130) of acoustic sensors (30) relative to the signal data from each of the other said acoustic sensors (30) of the array (130) of acoustic sensors (30).

4. The method of claim 1, wherein the determining further includes evaluating the signal data from at least one of the acoustic sensors (30) of the array (130) of acoustic sensors (30) relative to stored signal data representative of background noise.

5. The method of any preceding claim, wherein the seal (50) extends circumferentially relative to the compartment (36), and the sensors (30) of the array (130) of acoustic sensors (30) are disposed at circumferential positions relative to the seal (50).

6. The method of claim 5, wherein the sensors (30) of the array (130) of acoustic sensors (30) are uniformly spaced apart from one another.

7. The method of claim 5, wherein the sensors (30) of the array (130) of acoustic sensors (30) are non-uniformly spaced apart from one another.

8. A method of inspecting a sealed compartment (36) within a gas turbine engine (10), the sealed compartment (36) having an interior cavity (48) defined by one or more containment walls, the sealed compartment (36) including a seal (50) and at least one port (52) providing passage into the interior cavity (48), the method comprising:
using at least one acoustic transmitter (32) to emit at least one acoustic signal into the interior cavity (48), the acoustic transmitter (32) in communication with the at least one port (52);
using at least one acoustic sensor (30) to sense acoustic signals in the interior cavity (48), the at least one acoustic sensor (30) in communication with the at least one port (52), the at least one acoustic sensor (30) configured to sense emitted acoustic signals produced by the at least one acoustic transmitter (32) and to produce signal data representative of sensed acoustic signals; and
determining the presence or absence of a compromised region (54) of the seal (50) using the signal data from the at least one acoustic sensor (30).

9. The method of claim 8, wherein the at least one port (52) includes a first port (52A) providing passage into the interior cavity (48) and a second port (52B) providing passage into the interior cavity (48); and
wherein the at least one acoustic transmitter (32) is in communication with the first port (52A); and
wherein the at least one acoustic sensor (30) is in communication with the second port (52B).

10. The method of claim 8 or 9, wherein the determining includes producing an inspection acoustic signature using the signal data from the at least one acoustic sensor (30), and determining the presence or absence of said compromised region (54) of the seal (50) by analyzing the inspection acoustic signature relative to a standard acoustic signature associated with the compartment (36) and an uncompromised said seal (50),
wherein, optionally, the inspection acoustic signature includes a first transfer function and the standard acoustic signal includes a second transfer function,
wherein, further optionally, the first transfer function is produced using the emitted acoustic signals and the sensed acoustic signals.

11. A system for inspecting a sealed compartment (36) within a gas turbine engine (10), the sealed compartment (36) having an interior cavity (48) defined by one or more containment walls, the sealed compartment (36) including a seal (50) and at least one port (52) providing passage into the interior cavity (48), comprising:
at least one acoustic transmitter (32) configured to selectively produce at least one emitted acoustic signal into the interior cavity (48);
an array (130) of acoustic sensors (30) configured to sense acoustic signals, the acoustic sensors (30) configured for positioning in proximity to the seal (50) outside of the interior cavity (48) of the sealed compartment (36), wherein each said acoustic sensor (30) is configured to sense emitted acoustic signals produced by the at least one acoustic transmitter (32) and to produce signal data representative of sensed acoustic signals; and
a controller (34) in communication with the at least one acoustic transmitter (32), the array (130) of acoustic sensors (30), and a non-transitory memory storing instructions, which instructions when executed cause the controller (34) to:
control the at least one acoustic transmitter (32) to selectively produce at least one emitted acoustic signal into the interior cavity (48);
receive the signal data produced by the array (130) of acoustic sensors (30); and
determine the presence or absence of a compromised region (54) of the seal (50) using the signal data from at least one of the acoustic sensors (30) of the array (130) of acoustic sensors (30).

12. The system of claim 11, wherein:
the instructions when executed cause the controller (34) to evaluate the signal data from at least one of the acoustic sensors (30) of the array (130) of acoustic sensors (30) relative to the signal data from at least one other said acoustic sensor (30) of the array (130) of acoustic sensors (30); or
the instructions when executed cause the controller (34) to evaluate the signal data from at least one of the acoustic sensors (30) of the array (130) of acoustic sensors (30) relative to stored signal data representative of background noise.

13. The system of claim 11 or 12, wherein the sensors (30) of the array (130) of acoustic sensors (30) are uniformly spaced apart from one another.

14. A system for inspecting a sealed compartment (36) within a gas turbine engine (10), the sealed compartment (36) having an interior cavity (48) defined by one or more containment walls, the sealed compartment (36) including a seal (50) and at least one port (52) providing passage into the interior cavity (48), comprising:
at least one acoustic transmitter (32) configured to emit at least one acoustic signal into the interior cavity (48);
at least one acoustic sensor (30) configured to sense acoustic signals in the interior cavity (48), and configured to sense emitted acoustic signals produced by the at least one acoustic transmitter (32) and to produce signal data representative of sensed acoustic signals; and
a controller (34) in communication with the at least one acoustic transmitter (32), the at least one acoustic sensor (30), and a non-transitory memory storing instructions, which instructions when executed cause the controller (34) to:
control the at least one acoustic transmitter (32) to selectively produce at least one emitted acoustic signal into the interior cavity (48);
receive the signal data produced by the at least one acoustic sensor (30); and
determine the presence or absence of a compromised region (54) of the seal (50) using the signal data from the at least one of the acoustic sensor (30).

15. The system of claim 14, wherein:
the at least one port (52) includes a first port (52A) providing passage into the interior cavity (48) and a second port (52B) providing passage into the interior cavity (48), and the at least one acoustic transmitter (32) is configured to be in communication with the first port (52A) and the at least one acoustic sensor (30) is configured to be in communication with the second port (52B); and/or
the instructions when executed further cause the controller (34) to produce an inspection acoustic signature using the signal data from the at least one acoustic sensor (30), and determine the presence or absence of said compromised region (54) of the seal (50) by analyzing the inspection acoustic signature relative to a standard acoustic signature associated with the compartment (36) and an uncompromised said seal (50).

## Patentansprüche

1. Verfahren zum Inspizieren eines abgedichteten Teilraums (36) innerhalb eines Gasturbinenmotors (10), wobei der abgedichtete Teilraum (36) einen inneren Hohlraum (48) aufweist, der durch eine oder mehrere Einschlusswände definiert ist, wobei der abgedichtete Teilraum (36) eine Dichtung (50) und mindestens eine Öffnung (52) beinhaltet, die einen Durchgang in den inneren Hohlraum (48) bereitstellt, wobei das Verfahren Folgendes umfasst:
Verwenden mindestens eines akustischen Senders (32) zum Erzeugen mindestens eines in den inneren Hohlraum (48) emittierten akustischen Signals, wobei der mindestens eine akustische Sender (32) mit der mindestens einen Öffnung (52) in Verbindung steht;
Verwenden einer Anordnung (130) von akustischen Sensoren (30) zum Erfassen akustischer Signale, wobei die akustischen Sensoren (30) in der Nähe der Dichtung (50) außerhalb des inneren Hohlraums (48) des abgedichteten Teilraums (36) angeordnet sind, wobei jeder der akustischen Sensoren (30) zum Erfassen von durch den mindestens einen akustischen Sender (32) erzeugten emittierten akustischen Signalen und Erzeugen von Signaldaten konfiguriert ist, die die erfassten akustischen Signale darstellen; und
Bestimmen des Vorhandenseins oder Nichtvorhandenseins eines beeinträchtigten Bereichs (54) der Dichtung (50) unter Verwendung der Signaldaten von mindestens einem der akustischen Sensoren (30) der Anordnung (130) von akustischen Sensoren (30).

2. Verfahren nach Anspruch 1, wobei das Bestimmen ferner Auswerten der Signaldaten von mindestens einem der akustischen Sensoren (30) der Anordnung (130) von akustischen Sensoren (30) relativ zu den Signaldaten von mindestens einem anderen akustischen Sensor (30) der Anordnung (130) von akustischen Sensoren (30) beinhaltet.

3. Verfahren nach Anspruch 1, wobei das Bestimmen ferner Auswerten der Signaldaten von mindestens einem der akustischen Sensoren (30) der Anordnung (130) von akustischen Sensoren (30) relativ zu den Signaldaten von jedem der anderen akustischen Sensoren (30) der Anordnung (130) von akustischen Sensoren (30) beinhaltet.

4. Verfahren nach Anspruch 1, wobei das Bestimmen ferner Auswerten der Signaldaten von mindestens einem der akustischen Sensoren (30) der Anordnung (130) von akustischen Sensoren (30) relativ zu gespeicherten Signaldaten beinhaltet, die Hintergrundrauschen darstellen.

5. Verfahren nach einem der vorhergehenden Ansprüche, wobei sich die Dichtung (50) in Umfangsrichtung relativ zu dem Teilraum (36) erstreckt und die Sensoren (30) der Anordnung (130) von akustischen Sensoren (30) in Umfangsrichtung relativ zu der Dichtung (50) angeordnet sind.

6. Verfahren nach Anspruch 5, wobei die Sensoren (30) der Anordnung (130) von akustischen Sensoren (30) gleichmäßig voneinander beabstandet sind.

7. Verfahren nach Anspruch 5, wobei die Sensoren (30) der Anordnung (130) von akustischen Sensoren (30) nicht gleichmäßig voneinander beabstandet sind.

8. Verfahren zum Prüfen eines abgedichteten Teilraums (36) innerhalb eines Gasturbinenmotors (10), wobei der abgedichtete Teilraum (36) einen inneren Hohlraum (48) aufweist, der durch eine oder mehrere Einschlusswände definiert ist, wobei der abgedichtete Teilraum (36) eine Dichtung (50) und mindestens eine Öffnung (52) beinhaltet, die einen Durchgang in den inneren Hohlraum (48) bereitstellt, wobei das Verfahren Folgendes umfasst:
Verwenden mindestens eines akustischen Senders (32) zum Emittieren mindestens eines akustischen Signals in den inneren Hohlraum (48), wobei der akustische Sender (32) mit der mindestens einen Öffnung (52) in Verbindung steht;
Verwenden mindestens eines akustischen Sensors (30) zum Erfassen akustischer Signale in dem inneren Hohlraum (48), wobei der mindestens eine akustische Sensor (30) mit der mindestens einen Öffnung (52) in Verbindung steht, wobei der mindestens eine akustische Sensor (30) zum Erfassen von durch den mindestens einen akustischen Sender (32) erzeugten emittierten akustischen Signalen und Erzeugen von Signaldaten konfiguriert ist, die die erfassten akustischen Signale darstellen; und
Bestimmen des Vorhandenseins oder Nichtvorhandenseins eines beeinträchtigten Bereichs (54) der Dichtung (50) unter Verwendung der Signaldaten von dem mindestens einen akustischen Sensor (30).

9. Verfahren nach Anspruch 8, wobei die mindestens eine Öffnung (52) eine erste Öffnung (52A), die einen Durchgang in den inneren Hohlraum (48) bereitstellt, und eine zweite Öffnung (52B) beinhaltet, die einen Durchgang in den inneren Hohlraum (48) bereitstellt; und
wobei der mindestens eine akustische Sender (32) mit der ersten Öffnung (52A) in Verbindung steht; und
wobei der mindestens eine akustische Sensor (30) mit der zweiten Öffnung (52B) in Verbindung steht.

10. Verfahren nach Anspruch 8 oder 9, wobei das Bestimmen Erzeugen einer akustischen Inspektionssignatur unter Verwendung der Signaldaten von dem mindestens einen akustischen Sensor (30) und Bestimmen des Vorhandenseins oder Nichtvorhandenseins des beeinträchtigten Bereichs (54) der Dichtung (50) durch Analysieren der akustischen Inspektionssignatur relativ zu einer akustischen Standardsignatur beinhaltet, die dem Teilbereich (36) und einer nicht beeinträchtigten Dichtung (50) zugeordnet ist,
wobei die akustische Inspektionssignatur optional eine erste Übertragungsfunktion beinhaltet und das akustische Standardsignal eine zweite Übertragungsfunktion beinhaltet, wobei die erste Übertragungsfunktion ferner optional unter Verwendung der emittierten akustischen Signale und der erfassten akustischen Signale erzeugt wird.

11. System zum Inspizieren eines abgedichteten Teilraums (36) innerhalb eines Gasturbinenmotors (10), wobei der abgedichtete Teilraum (36) einen inneren Hohlraum (48) aufweist, der durch eine oder mehrere Einschlusswände definiert ist, wobei der abgedichtete Teilraum (36) eine Dichtung (50) und mindestens eine Öffnung (52) beinhaltet, die einen Durchgang in den inneren Hohlraum (48) bereitstellt, umfassend:
mindestens einen akustischen Sender (32), der zum selektiven Erzeugen mindestens eines in den inneren Hohlraum (48) emittierten akustischen Signals konfiguriert ist;
eine Anordnung (130) von akustischen Sensoren (30), die zum Erfassen akustischer Signale konfiguriert ist, wobei die akustischen Sensoren (30) zum Positionieren in der Nähe der Dichtung (50) außerhalb des inneren Hohlraums (48) des abgedichteten Teilraums (36) konfiguriert sind, wobei jeder der akustischen Sensoren (30) zum Erfassen von durch den mindestens einen akustischen Sender (32) erzeugten emittierten akustischen Signalen und Erzeugen von Signaldaten konfiguriert ist, die die erfassten akustischen Signale darstellen; und
eine Steuerung (34), die mit dem mindestens einen akustischen Sender (32), der Anordnung (130) von akustischen Sensoren (30) und einem nichtflüchtigen Speicher, der Anweisungen speichert, in Verbindung steht, wobei die Anweisungen beim Ausführen die Steuerung (34) zu Folgendem veranlassen:
Steuern des mindestens einen akustischen Senders (32) zum selektiven Erzeugen mindestens eines in den inneren Hohlraum (48) emittierten akustischen Signals;
Empfangen der von der Anordnung (130) von akustischen Sensoren (30) erzeugten Signaldaten; und
Bestimmen des Vorhandenseins oder Nichtvorhandenseins eines beeinträchtigten Bereichs (54) der Dichtung (50) unter Verwendung der Signaldaten von mindestens einem der akustischen Sensoren (30) der Anordnung (130) von akustischen Sensoren (30).

12. System nach Anspruch 11, wobei:
die Anweisungen beim Ausführen ferner die Steuerung (34) zum Auswerten der Signaldaten von mindestens einem der akustischen Sensoren (30) der Anordnung (130) von akustischen Sensoren (30) relativ zu den Signaldaten von mindestens einem anderen akustischen Sensor (30) der Anordnung (130) von akustischen Sensoren (30) veranlassen; oder
die Anweisungen beim Ausführen ferner die Steuerung (34) zum Auswerten der Signaldaten von mindestens einem der akustischen Sensoren (30) der Anordnung (130) von akustischen Sensoren (30) relativ zu gespeicherten Signaldaten veranlassen, die Hintergrundrauschen darstellen.

13. System nach Anspruch 11 oder 12, wobei die Sensoren (30) der Anordnung (130) von akustischen Sensoren (30) gleichmäßig voneinander beabstandet sind.

14. System zum Inspizieren eines abgedichteten Teilraums (36) innerhalb eines Gasturbinenmotors (10), wobei der abgedichtete Teilraum (36) einen inneren Hohlraum (48) aufweist, der durch eine oder mehrere Einschlusswände definiert ist, wobei der abgedichtete Teilraum (36) eine Dichtung (50) und mindestens eine Öffnung (52) beinhaltet, die einen Durchgang in den inneren Hohlraum (48) bereitstellt, umfassend:
mindestens einen akustischen Sender (32), der zum Emittieren mindestens eines akustischen Signals in den inneren Hohlraum (48) konfiguriert ist;
mindestens eines akustischen Sensors (30), der zum Erfassen akustischer Signale in dem inneren Hohlraum (48) konfiguriert ist und zum Erfassen von durch den mindestens einen akustischen Sender (32) erzeugten emittierten akustischen Signalen und Erzeugen von Signaldaten konfiguriert ist, die die erfassten akustischen Signale darstellen; und
eine Steuerung (34), die mit dem mindestens einen akustischen Sender (32), dem mindestens einen akustischen Sensor (30) und einem nichtflüchtigen Speicher, der Anweisungen speichert, in Verbindung steht, wobei die Anweisungen beim Ausführen die Steuerung (34) zu Folgendem veranlassen:
Steuern des mindestens einen akustischen Senders (32) zum selektiven Erzeugen mindestens eines in den inneren Hohlraum (48) emittierten akustischen Signals;
Empfangen der von dem mindestens einen akustischen Sensor (30) erzeugten Signaldaten; und
Bestimmen des Vorhandenseins oder Nichtvorhandenseins eines beeinträchtigten Bereichs (54) der Dichtung (50) unter Verwendung der Signaldaten von dem mindestens einen des akustischen Sensors (30).

15. System nach Anspruch 14, wobei:
die mindestens eine Öffnung (52) eine erste Öffnung (52A), die einen Durchgang in den inneren Hohlraum (48) bereitstellt, und eine zweite Öffnung (52B) beinhaltet, die einen Durchgang in den inneren Hohlraum (48) bereitstellt, beinhaltet, und der mindestens eine akustische Sender (32) zum Inverbindungstehen mit der ersten Öffnung (52A) konfiguriert ist und der mindestens eine akustische Sensor (30) zum Inverbindungstehen mit der zweiten Öffnung (52B) konfiguriert ist; und/oder
die Anweisungen beim Ausführen die Steuerung (34) ferner zum Erzeugen einer akustischen Inspektionssignatur unter Verwendung der Signaldaten von dem mindestens einen akustischen Sensor (30) und Bestimmen dds Vorhandenseins oder Nichtvorhandenseins des beeinträchtigten Bereichs (54) der Dichtung (50) durch Analysieren der akustischen Inspektionssignatur relativ zu einer akustischen Standardsignatur veranlassen, die dem Teilraum (36) und einer nicht beeinträchtigten Dichtung (50) zugeordnet ist.

## Revendications

1. Procédé d'inspection d'un compartiment étanche (36) dans un moteur à turbine à gaz (10), le compartiment étanche (36) ayant une cavité intérieure (48) définie par une ou plusieurs parois de confinement, le compartiment étanche (36) comportant un joint d'étanchéité (50) et au moins un port (52) fournissant un passage dans la cavité intérieure (48), le procédé comprenant :
l'utilisation d'au moins un transmetteur acoustique (32) pour produire au moins un signal acoustique émis dans la cavité intérieure (48), l'au moins un transmetteur acoustique (32) étant en communication avec l'au moins un port (52) ;
l'utilisation d'un réseau (130) de capteurs acoustiques (30) pour détecter des signaux acoustiques, les capteurs acoustiques (30) étant disposés à proximité du joint d'étanchéité (50) à l'extérieur de la cavité intérieure (48) du compartiment étanche (36), chaque dit capteur acoustique (30) étant configuré pour détecter des signaux acoustiques émis produits par l'au moins un transmetteur acoustique (32) et pour produire des données de signal représentatives de signaux acoustiques détectés ; et
la détermination de la présence ou l'absence d'une région compromise (54) du joint d'étanchéité (50) à l'aide des données de signal provenant d'au moins l'un des capteurs acoustiques (30) du réseau (130) de capteurs acoustiques (30).

2. Procédé selon la revendication 1, dans lequel la détermination comporte également l'évaluation des données de signal provenant d'au moins l'un des capteurs acoustiques (30) du réseau (130) de capteurs acoustiques (30) par rapport aux données de signal provenant d'au moins un autre dit capteur acoustique (30) du réseau (130) de capteurs acoustiques (30).

3. Procédé selon la revendication 1, dans lequel la détermination comporte également l'évaluation des données de signal provenant d'au moins l'un des capteurs acoustiques (30) du réseau (130) de capteurs acoustiques (30) par rapport aux données de signal provenant de chacun des autres dits capteurs acoustiques (30) du réseau (130) de capteurs acoustiques (30).

4. Procédé selon la revendication 1, dans lequel la détermination comporte également l'évaluation des données de signal provenant d'au moins l'un des capteurs acoustiques (30) du réseau (130) de capteurs acoustiques (30) par rapport à des données de signal stockées représentatives du bruit de fond.

5. Procédé selon une quelconque revendication précédente, dans lequel le joint d'étanchéité (50) se prolonge circonférentiellement par rapport au compartiment (36), et les capteurs (30) du réseau (130) de capteurs acoustiques (30) sont disposés au niveau de positions circonférentielles par rapport au joint d'étanchéité (50).

6. Procédé selon la revendication 5, dans lequel les capteurs (30) du réseau (130) de capteurs acoustiques (30) sont uniformément espacés les uns des autres.

7. Procédé selon la revendication 5, dans lequel les capteurs (30) du réseau (130) de capteurs acoustiques (30) sont non uniformément espacés les uns des autres.

8. Procédé d'inspection d'un compartiment étanche (36) dans un moteur à turbine à gaz (10), le compartiment étanche (36) ayant une cavité intérieure (48) définie par une ou plusieurs parois de confinement, le compartiment étanche (36) comportant un joint d'étanchéité (50) et au moins un port (52) fournissant un passage dans la cavité intérieure (48), le procédé comprenant :
l'utilisation d'au moins un transmetteur acoustique (32) pour émettre au moins un signal acoustique dans la cavité intérieure (48), le transmetteur acoustique (32) étant en communication avec l'au moins un port (52) ;
l'utilisation d'au moins un capteur acoustique (30) pour détecter des signaux acoustiques dans la cavité intérieure (48), l'au moins un capteur acoustique (30) étant en communication avec l'au moins un port (52), l'au moins un capteur acoustique (30) étant configuré pour détecter des signaux acoustiques émis produits par l'au moins un transmetteur acoustique (32) et pour produire des données de signal représentatives des signaux acoustiques détectés ; et
la détermination de la présence ou l'absence d'une région compromise (54) du joint d'étanchéité (50) à l'aide des données de signal provenant de l'au moins capteur acoustique (30).

9. Procédé selon la revendication 8, dans lequel l'au moins un port (52) comporte un premier port (52A) fournissant un passage dans la cavité intérieure (48) et un second port (52B) fournisseur un passage dans la cavité intérieure (48) ; et
dans lequel l'au moins un transmetteur acoustique (32) est en communication avec le premier port (52A) ; et
dans lequel l'au moins un capteur acoustique (30) est en communication avec le second port (52B).

10. Procédé selon la revendication 8 ou 9, dans lequel la détermination comporte la production d'une signature acoustique d'inspection à l'aide des données de signal provenant de l'au moins un capteur acoustique (30), et la détermination de la présence ou de l'absence de ladite région compromise (54) du joint d'étanchéité (50) en analysant la signature acoustique d'inspection par rapport à une signature acoustique standard associée au compartiment (36) et à un joint d'étanchéité (50) non compromis,
dans lequel, éventuellement, la signature acoustique d'inspection comporte une première fonction de transfert et le signal acoustique standard comporte une seconde fonction de transfert,
dans lequel, également facultativement, la première fonction de transfert est produite à l'aide des signaux acoustiques émis et des signaux acoustiques détectés.

11. Système d'inspection d'un compartiment étanche (36) dans un moteur à turbine à gaz (10), le compartiment étanche (36) ayant une cavité intérieure (48) définie par une ou plusieurs parois de confinement, le compartiment étanche (36) comportant un joint d'étanchéité (50) et au moins un port (52) fournissant un passage dans la cavité intérieure (48), comprenant :
au moins un transmetteur acoustique (32) configuré pour produire sélectivement au moins un signal acoustique émis dans la cavité intérieure (48) ;
un réseau (130) de capteurs acoustiques (30) configuré pour détecter des signaux acoustiques, les capteurs acoustiques (30) étant configurés pour le positionnement à proximité du joint d'étanchéité (50) à l'extérieur de la cavité intérieure (48) du compartiment étanche (36), dans lequel chaque dit capteur acoustique (30) est configuré pour détecter des signaux acoustiques émis produits par l'au moins un transmetteur acoustique (32) et pour produire des données de signal représentatives de signaux acoustiques détectés ; et
un dispositif de commande (34) en communication avec au moins un transmetteur acoustique (32), le réseau (130) de capteurs acoustiques (30), et une mémoire non transitoire stockant des instructions, lesquelles instructions, lorsqu'elles sont exécutées, amènent le dispositif de commande (34) à :
commander l'au moins un transmetteur acoustique (32) pour produire sélectivement au moins un signal acoustique émis dans la cavité intérieure (48) ;
recevoir les données de signal produites par le réseau (130) de capteurs acoustiques (30) ; et
déterminer la présence ou l'absence d'une région compromise (54) du joint d'étanchéité (50) à l'aide des données de signal provenant d'au moins l'un des capteurs acoustiques (30) du réseau (130) de capteurs acoustiques (30).

12. Système selon la revendication 11, dans lequel :
les instructions, lorsqu'elles sont exécutées, amènent le dispositif de commande (34) à évaluer les données de signal provenant d'au moins l'un des capteurs acoustiques (30) du réseau (130) de capteurs acoustiques (30) par rapport aux données de signal provenant d'au moins un autre dit capteur acoustique (30) du réseau (130) de capteurs acoustiques (30) ; ou
les instructions, lorsqu'elles sont exécutées, amènent le dispositif de commande (34) à évaluer les données de signal provenant d'au moins l'un des capteurs acoustiques (30) du réseau (130) de capteurs acoustiques (30) par rapport aux données de signal stockées représentatives du bruit de fond.

13. Système selon la revendication 11 ou 12, dans lequel les capteurs (30) du réseau (130) de capteurs acoustiques (30) sont uniformément espacés les uns des autres.

14. Système d'inspection d'un compartiment étanche (36) dans un moteur à turbine à gaz (10), le compartiment étanche (36) ayant une cavité intérieure (48) définie par une ou plusieurs parois de confinement, le compartiment étanche (36) comportant un joint d'étanchéité (50) et au moins un port (52) fournissant un passage dans la cavité intérieure (48), comprenant :
au moins un transmetteur acoustique (32) configuré pour émettre au moins un signal acoustique dans la cavité intérieure (48) ;
au moins un capteur acoustique (30) configuré pour détecter des signaux acoustiques dans la cavité intérieure (48), et configuré pour détecter des signaux acoustiques émis produits par l'au moins un transmetteur acoustique (32) et pour produire des données de signal représentatives des signaux acoustiques détectés ; et
un dispositif de commande (34) en communication avec au moins un transmetteur acoustique (32), l'au moins un capteur acoustique (30), et une mémoire non transitoire stockant des instructions, lesquelles instructions, lorsqu'elles sont exécutées, amènent le dispositif de commande (34) à :
commander l'au moins un transmetteur acoustique (32) pour produire sélectivement au moins un signal acoustique émis dans la cavité intérieure (48) ;
recevoir les données de signal produites par l'au moins un capteur acoustique (30) ; et
déterminer la présence ou l'absence d'une région compromise (54) du joint d'étanchéité (50) à l'aide des données de signal provenant de l'au moins du capteur acoustique (30).

15. Système selon la revendication 14, dans lequel :
l'au moins un port (52) comporte un premier port (52A) fournissant un passage dans la cavité intérieure (48) et un second port (52B) fournissant le passage dans la cavité intérieure (48), et l'au moins un transmetteur acoustique (32) est configuré pour être en communication avec le premier port (52A) et l'au moins un capteur acoustique (30) est configuré pour être en communication avec le second port (52B) ; et/ou les instructions, lorsqu'elles sont exécutées, amènent également le dispositif de commande (34) à produire une signature acoustique d'inspection à l'aide des données de signal provenant de l'au moins un capteur acoustique (30), et à déterminer la présence ou l'absence de ladite région compromise (54) du joint d'étanchéité (50) en analysant la signature acoustique d'inspection par rapport à une signature acoustique standard associée au compartiment (36) et à un dit joint d'étanchéité (50) non compromis.
